(19) 

**Europäisches Patentamt**
**European Patent Office**
**Office européen des brevets**

(11) **EP 4 332 837 A1**

(12) # EUROPEAN PATENT APPLICATION
published in accordance with Art. 153(4) EPC

(43) Date of publication:
**06.03.2024 Bulletin 2024/10**

(21) Application number: **23808654.0**

(22) Date of filing: **20.06.2023**

(51) International Patent Classification (IPC):
**G06N 3/082** *(2023.01)*

(52) Cooperative Patent Classification (CPC):
**G06N 3/082**

(86) International application number:
**PCT/CN2023/101357**

(87) International publication number:
**WO 2024/001870 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2022 CN 202210764337
16.08.2022 CN 202210986001**

(71) Applicant: **Huawei Technologies Co., Ltd.
Longgang
Shenzhen, Guangdong 518129 (CN)**

(72) Inventors:
- **ZHANG, Jingyi**
  **Shenzhen, Guangdong 518129 (CN)**
- **WANG, Yongzhong**
  **Shenzhen, Guangdong 518129 (CN)**
- **LIU, Yanlin**
  **Shenzhen, Guangdong 518129 (CN)**

(74) Representative: **Gill Jennings & Every LLP
The Broadgate Tower
20 Primrose Street
London EC2A 2ES (GB)**

(54) **TRAINING METHOD FOR ARTIFICIAL INTELLIGENCE MODEL, AND RELATED DEVICE**

(57) This application provides a method for training an artificial intelligence (AI) model. The method is applied to a system for training a model. The system includes a first training unit and at least one second training unit. The method includes: The first training unit receives a first training subtask, obtains, by executing the first training subtask using a plurality of first training subunits, a first weight obtained through synchronization among the plurality of first training subunits, asynchronously receives a second weight obtained by executing a second training subtask by the at least one second training unit, and obtains a weight of the AI model based on the first weight and the second weight. According to the method, a hierarchical asynchronization training mechanism is introduced. To be specific, synchronous update is used inside training units, and an asynchronous update manner is used between training units, so that synchronization waiting duration between the training units is avoided, overall training duration is shortened, and training efficiency is improved.

FIG. 3

EP 4 332 837 A1

## Description

This application claims priorities to Chinese Patent Application No. 202210764337.4, filed with the Chinese National Intellectual Property Administration on June 29, 2022 and entitled "TRAINING METHOD, APPARATUS, AND TRAINING SYSTEM", and to Chinese Patent Application No. 202210986001.2, filed with the Chinese National Intellectual Property Administration on August 16, 2022 and entitled " METHOD FOR TRAINING ARTIFICIAL INTELLIGENCE MODEL AND RELATED DEVICE", which are incorporated herein by reference in their entireties.

## TECHNICAL FIELD

This application relates to the field of artificial intelligence (artificial intelligence, AI) technologies, and in particular, to a method for training an AI model, a system for training a model, a computing cluster, a computer-readable storage medium, and a computer program product.

## BACKGROUND

With the continuous development of AI technologies, especially the rise of machine learning (machine learning, ML) algorithms, many data-driven AI models are generated. These AI models may be used for various AI tasks such as image classification, object detection, text recognition, and speech recognition, so that labor costs can be greatly reduced.

A machine learning algorithm is an algorithm that automatically analyzes data to obtain a rule and predict unknown data using the rule. A training device such as a training server may obtain an AI model through training using the foregoing machine learning algorithm. A training process for the training server may include the following. The training server determines a neural network used by a model, and performs weight initialization on the neural network, to obtain an initialized neural network model. Then, the training server inputs sample data in a data set into the initialized neural network model, and updates a weight of the neural network model based on a result of processing the sample data by the neural network model. When the neural network model meets a training stop condition, the training server may stop training.

In consideration of large weight scales for some AI models, for example, some general-purpose AI foundation models may have a 100-billion-level weight scale, a plurality of training devices may be used for collaborative training. For example, a plurality of training servers in a plurality of computing centers are used for collaborative training across computing centers, to improve training efficiency.

Collaborative training of two computing centers is used as an example. First, the two computing centers inside perform synchronization with respective master nodes once, then the master nodes of the two computing centers perform synchronization with each other, and then synchronous update is performed once inside each computing center.

Because network communication between the computing centers has a low bandwidth and a high delay, and an amount of data transmitted between the computing centers is extremely large, resulting in long synchronization waiting duration. Even if a quantity of training devices is increased, it may be difficult to greatly reduce overall training duration due to the long synchronization waiting duration, or even the overall training duration may increase, which affects training efficiency and increases training costs.

## SUMMARY

This application provides a method for training an AI model. According to the method, a hierarchical asynchronization training mechanism is introduced. Specifically, a synchronous update manner is used inside training units, and an asynchronous update manner is used between the training units, so that synchronization waiting duration between the training units is avoided, overall training duration is shortened, training efficiency is improved, and training costs are reduced. This application further provides a system for training a model, a computing cluster, a computer-readable storage medium, and a computer program product.

According to a first aspect, this application provides a method for training an AI model. The method is applied to a system for training a model. The system for training a model includes a first training unit and at least one second training unit. The first training unit includes a plurality of first training subunits.

Specifically, the first training unit may receive a first training subtask, and obtain, by executing the first training subtask using the plurality of first training subunits, a first weight obtained through synchronization among the plurality of first training subunits. In addition, the first training unit may further asynchronously receive a second weight obtained by executing a second training subtask by the at least one second training unit. Then, the first training unit obtains a weight of the AI model based on the first weight and the second weight.

According to this method, a hierarchical asynchronization training manner is provided. To be specific, weight update is performed among a plurality of training subunits of a same training unit in a synchronization manner, and weight update is performed, in an asynchronization manner, on different training units of the system for training a model. This resolves a problem that, due to a limited bandwidth between computing centers, unacceptable synchronization waiting duration is introduced in a synchronization training manner, and efficient training cannot be performed.

In some possible implementations, the second training unit includes a plurality of second training subunits. Correspondingly, the second training unit may alternatively obtain, by executing the second training subtask using the plurality of second training subunits, the second weight obtained through synchronization among the plurality of second training subunits. In this way, a plurality of training subunits may be used for parallel training inside the training unit, which improves the training efficiency.

In some possible implementations, the second training unit may compress the second weight obtained through the synchronization among the plurality of second training subunits. Correspondingly, the first training unit may asynchronously receive the compressed second weight. In this way, an amount of data transmitted between the first training unit and the second training unit can be reduced, transmission duration can be shortened, resources of the first training unit and the second training unit can be prevented from being idle, resource utilization can be improved, and the training efficiency can be improved.

In some possible implementations, the second training unit may compress the second weight through different compression mechanisms. For example, the second training unit may determine a difference between the second weight obtained through the current synchronization among the plurality of second training subunits and a second weight obtained through previous synchronization among the plurality of second training subunits, and compress, based on the difference, the second weight obtained through the current synchronization among the plurality of second training subunits. For another example, the second training unit may determine a norm of a weight of each row or each column in the second weight obtained through the current synchronization among the plurality of second training subunits, and compress, based on the norm, the second weight obtained through the current synchronization among the plurality of second training subunits.

According to the method, the second training unit may compress the second weight by selecting an appropriate compression mechanism according to a distribution rule of the second weight, to reduce the amount of transmitted data as much as possible, shorten the transmission duration, and further shorten training duration, and improve the training efficiency.

In some possible implementations, the first training unit may further obtain a third weight obtained through previous asynchronous update of the first training unit and the at least one second training unit, and determine a distance between the third weight and a comprehensive weight that is determined using the first weight and the second weight. Correspondingly, the first training unit may obtain the weight of the AI model based on the first weight and the second weight when the distance between the comprehensive weight and the third weight is greater than a preset distance.

According to the method, the first training unit measures validity of weights based on a distance between the weights. If a new weight is very approximate to a historical weight, the first training unit may skip this update, and perform updating after a specific difference is accumulated. In this way, update frequency can be reduced, and the resource utilization can be improved.

In some possible implementations, when performing weight update on the training units, the first training unit may obtain a first correlation between the first weight and the second weight based on a correlation measurement function, and then obtain the weight of the AI model based on the first correlation, the first weight, and the second weight.

According to the method, the weight update on the training units is performed using the first correlation between the first weight and the second weight, so that a weight can be properly updated, and performance deterioration caused by an average policy for model weights can be avoided.

In some possible implementations, the first training unit may further perform weight update with reference to historical update information. Specifically, the first training unit may obtain, based on the correlation measurement function, a second correlation between the third weight and the comprehensive weight that is determined using the first weight and the second weight. The third weight is a weight obtained through the previous asynchronous update of the first training unit and the at least one second training unit. Then, the first training unit obtains a variation of current global update based on the second correlation, a difference between the comprehensive weight and the third weight, and a variation of previous global update. Correspondingly, the first training unit may obtain the weight of the AI model based on the variation of the current global update, the first correlation, the first weight, and the second weight.

According to the method, the first training unit performs global weight update by fully considering a correlation between the first weight and the second weight and the historical update information, so that the performance deterioration caused by the average policy for the model weights during a current round of update can be avoided.

In some possible implementations, the plurality of training subunits in the training unit are synchronized using an improved parameter server architecture or a ring architecture. In the improved parameter server architecture, a parameter server may be replaced with a master node, and a worker node determines a weight based on a gradient, and then uploads the weight to the master node instead of uploading the gradient to the parameter server. In comparison with a case in which the parameter server determines the weight based on the gradient uploaded by each worker node, this can further shorten the training duration. In the ring architecture, workers form a ring structure, and each worker is connected to other two workers. Each worker only performs information transmission with two adjacent workers. Each worker has a complete copy of model parameters and performs gradient calculation and update. It should be noted that, in the ring architecture, any node that completes internal synchronization may be used as the master node, to perform weight update on the training units.

In some possible implementations, the training unit may be a computing cluster, and the computing cluster may be, for example, a computing cluster corresponding to a computing center. The training subunit may be a server in the computing cluster. In this way, efficient training across computing centers can be implemented, and this is especially applicable to a training scenario of an AI foundation model.

In some possible implementations, the training unit may be a server. For example, the first training unit and the second training unit may be servers in a same computing center. The training subunit may be a training card in the server. In this way, efficient training inside a computing center can be implemented, and this is especially applicable to a training scenario of a specific task model.

According to a second aspect, this application provides a system for training a model. The system for training a model includes a first training unit and at least one second training unit, and the first training unit includes a plurality of first training subunits.

The first training unit is configured to receive a first training subtask, and obtain, by executing the first training subtask using the plurality of first training subunits, a first weight obtained through synchronization among the plurality of first training subunits.

The second training unit is configured to obtain a second weight by executing a second training subtask.

The first training unit is further configured to asynchronously receive the second weight, and obtain a weight of the AI model based on the first weight and the second weight.

In some possible implementations, the second training unit includes a plurality of second training subunits.

The second training unit is specifically configured to:

obtain, by executing the second training subtask using the plurality of second training subunits, the second weight obtained through synchronization among the plurality of second training subunits.

In some possible implementations, the second training unit is further configured to:

compress the second weight obtained through the synchronization among the plurality of second training subunits.

The first training unit is specifically configured to:

asynchronously receive the compressed second weight.

In some possible implementations, the second training unit is specifically configured to:

determine a difference between the second weight obtained through the current synchronization among the plurality of second training subunits and a second weight obtained through previous synchronization among the plurality of second training subunits, and compress, based on the difference, the second weight obtained through the current synchronization among the plurality of second training subunits; or

determine a norm of a weight of each row or each column in the second weight obtained through the current synchronization among the plurality of second training subunits, and compress, based on the norm, the second weight obtained through the current synchronization among the plurality of second training subunits.

In some possible implementations, the first training unit is further configured to:

obtain a third weight obtained through previous asynchronous update of the first training unit and the at least one second training unit; and

determine a distance between the third weight and a comprehensive weight that is determined using the first weight and the second weight.

The first training unit is specifically configured to:

obtain, by the first training unit, the weight of the AI model based on the first weight and the second weight when the distance between the comprehensive weight and the third weight is greater than a preset distance.

In some possible implementations, the first training unit is specifically configured to:

obtain a first correlation between the first weight and the second weight based on a correlation measurement function; and

obtain the weight of the AI model based on the first correlation, the first weight, and the second weight.

In some possible implementations, the first training unit is further configured to:

obtain, based on the correlation measurement function, a second correlation between the third weight and the comprehensive weight that is determined using the first weight and the second weight, where the third weight is a weight obtained through the previous asynchronous update of the first training unit and the at least one second training unit; and

obtain a variation of current global update based on the second correlation, a difference between the comprehensive weight and the third weight, and a variation of previous global update.

The first training unit is specifically configured to:
obtain the weight of the AI model based on the variation of the current global update, the first correlation, the first weight, and the second weight.

In some possible implementations, the plurality of training subunits in the training unit are synchronized using an improved parameter server architecture or a ring architecture.

In some possible implementations, the training unit is a computing cluster, and the training subunit is a server in the computing cluster.

In some possible implementations, the training unit is a server, and the training subunit is a training card in the server.

According to a third aspect, this application provides a computer cluster. The computing cluster includes at least one computing device. The at least one computing device includes at least one processor and at least one memory. The at least one processor and the at least one memory communicate with each other. The at least one processor is configured to execute instructions stored in the at least one memory, to enable the computing device or the computing cluster to perform the method for training a model according to any one of the first aspect or the implementations of the first aspect.

According to a fourth aspect, this application provides a computer-readable storage medium. The computer-readable storage medium stores instructions. The instructions instruct a computing device or a computing cluster to perform the method for training a model according to any one of the first aspect or the implementations of the first aspect.

According to a fifth aspect, this application provides a computer program product including instructions. When the computer program product runs on a computing device or a computing cluster, the computing device or the computing cluster is enabled to perform the method for training a model according to any one of the first aspect or the implementations of the first aspect.

In this application, based on the implementations according to the foregoing aspects, the implementations may be further combined to provide more implementations.

## BRIEF DESCRIPTION OF DRAWINGS

To describe the technical method in embodiments of this application more clearly, the following briefly describes the accompanying drawings that need to be used in embodiments.

FIG. 1 is a training procedure and a training pipeline diagram of an AI model according to an embodiment of this application;

FIG. 2 is a schematic diagram of an architecture of a system for training a model according to an embodiment of this application;

FIG. 3 is a flowchart of a method for training an AI model according to an embodiment of this application;

FIG. 4 is a training pipeline diagram of an AI model according to an embodiment of this application;

FIG. 5 is a diagram of a structure of a system for training a model according to an embodiment of this application;

FIG. 6 is a schematic diagram of a structure of a computing cluster according to an embodiment of this application;

FIG. 7 is a schematic diagram of a structure of a computing cluster according to an embodiment of this application; and

FIG. 8 is a schematic diagram of a structure of a computing cluster according to an embodiment of this application.

## DESCRIPTION OF EMBODIMENTS

Terms such as "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

Some technical terms used in embodiments of this application are first described.

An AI model is specifically a model that is obtained through training using an AI algorithm such as a machine learning algorithm, for completing an AI task. The AI model may be a general-purpose foundation model, or may be a model used for completing a specific task. The specific task includes but is not limited to image classification, object detection, text recognition, and speech recognition.

A weight, in the AI field, is usually a group of floating-point numbers, and is used as a main parameter of a neural network used by the AI model. Generally, the weight may participate in calculation during training for the AI model and be updated in a backpropagation phase. It should be noted that, weight scales (which are also referred to as parameter scales) of different AI models may be different. For example, some AI foundation models may have a 100-billion-level or 1-trillion-level weight scale.

For an AI model with a large weight scale, a plurality of training devices may be used for collaborative training. For example, for an AI foundation model with a 1-trillion-level weight scale, a plurality of training servers in a plurality of computing centers may be used for collaborative training across the computing centers, to improve training efficiency.

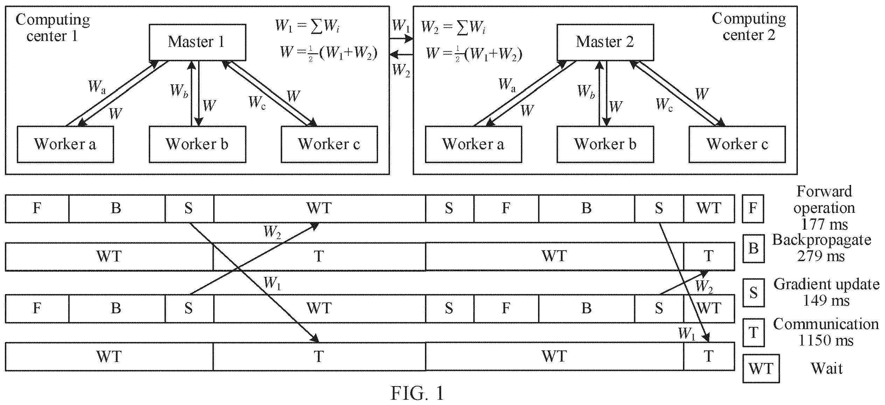

Collaborative training of two computing centers is used as an example. As shown in FIG. 1, each computing center may perform collaborative training using a primary/secondary architecture. Based on this, nodes in each computing center may be classified into two types: a master node and a worker node. During collaborative training, weight synchronization with the master node is first performed once in each computing center. For example, nodes such as a worker a, a worker b, and a worker c in a computing center 1 respectively send $W_a$, $W_b$, and $W_c$ to a master 1. The master 1 obtains a weight $W_1$ obtained through synchronization inside the computing center 1 based on the weights sent by the worker nodes. The master 1 may accumulate the weights of the workers to obtain $W_1$. Similarly, a computing center 2 may similarly obtain a weight $W_2$ obtained through synchronization inside the computing center 2. Then, weight synchronization is performed once between master nodes of the two computing centers. For example, the computing center 1 sends $W_1$ to the computing center 2 and receives $W_2$ sent by the computing center 2. In this way, the two computing centers can obtain a weight $W = \frac{1}{2}(W_1 + W_2)$ obtained through synchronization among the computing centers, and then synchronous update is performed once inside each computing center. For example, the master 1 delivers the weight $W$ to the worker a, the worker b, and the worker c in the computing center 1, and a master 2 delivers the weight $W$ to a worker a, a worker b, and a worker c in the computing center 2.

Because network communication between the computing centers has a low bandwidth and a high delay, and an amount of data transmitted between the computing centers is extremely large, resulting in long synchronization waiting duration. For example, with reference to FIG. 1, a worker in a specific computing center consumes about 177 milliseconds (milliseconds, ms) for a forward operation, consumes about 279 ms for backpropagation, and consumes about 147 ms for internal gradient update. In the foregoing phases, a master is in a waiting state (which is a period of time corresponding to a "WT" character in a second or fourth timeline in FIG. 1). Then, the master performs weight synchronization across the computing centers. Masters communicate with each other across the computing centers. This consumes about 1150 ms. In this case, the workers in the computing centers each are in a waiting state. After the master completes the communication, each worker may perform gradient update. In this way, even if a quantity of training devices is increased, it may be difficult to greatly reduce overall training duration due to the long synchronization waiting duration, or even the overall training duration may increase, which affects training efficiency and increases training costs.

In view of this, embodiments of this application provides a method for training an AI model. The method is applicable to a system for training a model. The system for training a model includes a plurality of training units. For ease of description, in embodiments of this application, one of the training units is referred to as a first training unit, and a training unit other than the first training unit is referred to as a second training unit. The first training unit may include a plurality of first training subunits. Similarly, the second training unit may also include a plurality of second training subunits.

Specifically, the first training unit receives a first training subtask. Then, the first training unit obtains, by executing the first training subtask using the plurality of first training subunits, a first weight obtained through synchronization among the plurality of first training subunits, and asynchronously receives a second weight obtained by executing a second training subtask by the at least one second training unit. Then, the first training unit obtains a weight of the AI model based on the first weight and the second weight.

According to this method, a hierarchical asynchronization training manner is provided. To be specific, weight update is performed synchronously among a plurality of training subunits of a same training unit, and weight update is performed asynchronously among different training units of the system for training a model. This resolves the following problems resulting from a limited bandwidth between computing centers: unacceptable synchronization waiting duration is introduced in a synchronization training manner and efficient training cannot be performed.

It should be noted that, in embodiments of this application, granularities of the training unit and the training subunit in the system for training a model may be determined based on a weight scale of the AI model to be trained. For example, when the weight scale is large and a large quantity of computing devices are required for training, the training unit may be a computing cluster, which may be a computing center, and the training subunit may be a server in the computing center. For another example, when the weight scale is small and a single computing center can complete training for the AI model, the training unit may be a server, and the training subunit may be a training card in the server. The training card is a processor configured to train the AI model, and includes a graphics processing unit (graphics processing unit, GPU) and a neural network processing unit (neural network processing unit, NPU).

To make the technical solutions of this application clearer and easier to understand, the following describes a system architecture in embodiments of this application by using an example in which the training unit is a computing center and the training subunit is a server.

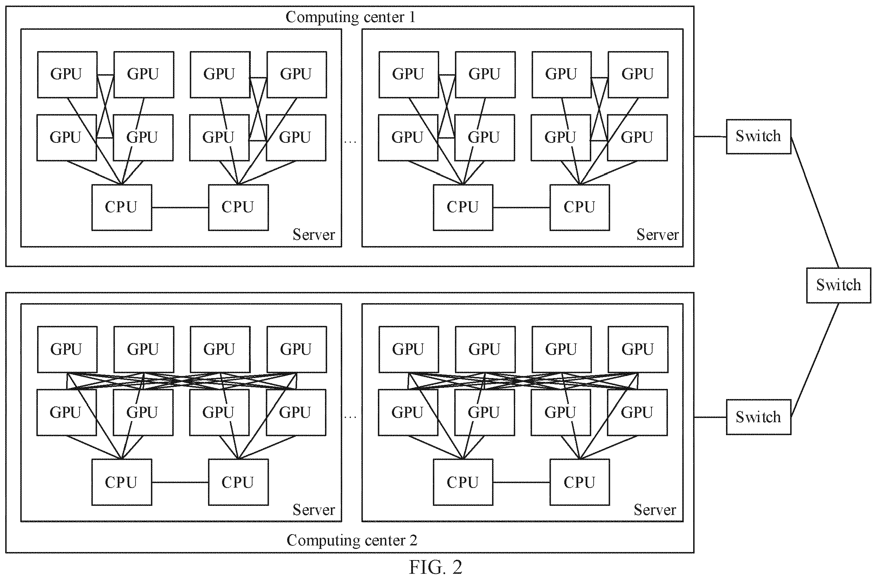

FIG. 2 is a schematic diagram of an architecture of a system for training a model. The system for training a model includes a plurality of computing centers. In FIG. 2, an example in which the system for training a model includes a total of two computing centers is used for description: a computing center 1 and a computing center 2. Each computing center includes a plurality of servers. Computing architectures of servers in different computing centers may be the same or may be different. For example, a server in the computing center 1 may use an architecture of four cards, and a server in the computing center 2 may use an architecture of eight cards.

The different computing centers may be interconnected through a switch network. The switch network may include a plurality of switches. The switch network between the computing centers usually has a low bandwidth and a high delay, and a switch network (not shown in FIG. 2) inside the computing center usually has a high bandwidth and a low delay.

Based on this, synchronous update may be performed inside the computing center. Asynchronous update may be performed between the computing center 1 and the computing center 2, to implement hierarchical asynchronization training. Specifically, a training task may be split into a plurality of training subtasks. In FIG. 1, an example in which the training task is split into a training subtask 1 and a training subtask 2 is used for description. The computing center 1 receives the training subtask 1. The computing center 1 may obtain, by executing the training subtask 1 through a plurality of servers, a first weight obtained through synchronization among the plurality of servers, and asynchronously receive a second weight obtained by executing the training subtask 2 by the computing center 2. Then, the computing center 1 obtains a weight of the AI model based on the first weight and the second weight.

Similar to the computing center 1, the computing center 2 may asynchronously receive the first weight obtained by executing the training subtask 1 by the first computing center, and obtain the weight of the AI model based on the first weight and the second weight that is obtained by the computing center 2 by executing the training subtask 2 through a plurality of servers and that is obtained through synchronization among the plurality of servers.

FIG. 2 is described using an example of collaborative training across the computing centers. When a weight scale of the AI model is small, a plurality of servers in a single computing center may alternatively be used for the collaborative training. A network of a plurality of training cards in the server is a high-speed network, and has a high bandwidth and a low delay. Based on this, synchronous update may be performed on a plurality of training cards of a same server, and asynchronous update may be performed on different servers.

Based on the system for training a model provided in embodiments of this application, an embodiment of this application further provides a method for training an AI model. The following describes, from a perspective of the system for training a model, the method for training an AI model in embodiments of this application.

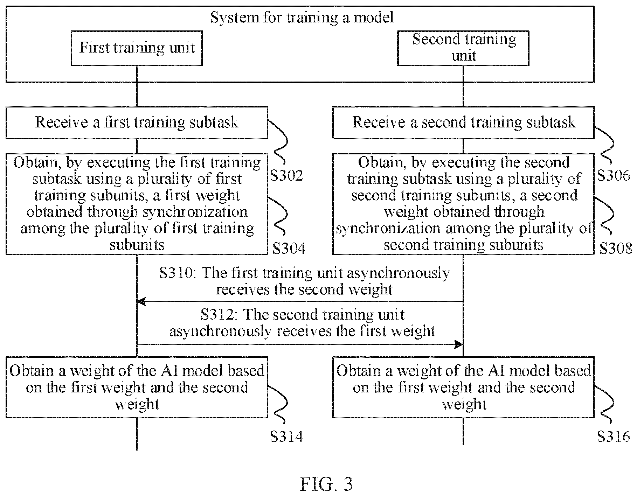

FIG. 3 is a flowchart of a method for training an AI model. A system for training a model includes a first training unit and at least one second training unit. For example, the first training unit may be the computing center 1 in FIG. 2, and the second training unit may be the computing center 2 in FIG. 2. The first training unit includes a plurality of first training subunits. The second training unit may include a plurality of second training subunits. For example, the first training subunit may be a server in the computing center 1, and the second training subunit may be a server in the computing center 2. The method includes the following steps.

S302: The first training unit receives a first training subtask.

The first training subtask is one of a plurality of training subtasks obtained by splitting a task used for training the AI model. A quantity of training subtasks may be equal to a quantity of training units. The first training subtask is specifically a training subtask that is in the plurality of training subtasks and that is scheduled to the first training unit.

S304: The first training unit obtains, by executing the first training subtask using the plurality of first training subunits, a first weight obtained through synchronization among the plurality of first training subunits.

The first training unit may obtain, by executing the first training subtask using the plurality of first training subunits in parallel, a weight obtained by executing the first training subtask by each first training subunit, and then obtain the first weight by synchronously updating weights obtained by the plurality of first training subunits.

The first training unit includes a master node, for example, the master 1 shown in FIG. 2. The plurality of first training subunits (for example, the worker a, the worker b, or the worker c in the computing center 1) may report, to the master node, weights (for example, $W_a$, $W_b$, and $W_c$,) obtained through training by the plurality of first training subunits respectively. The master node may obtain the first weight based on a weight reported by a worker node such as the worker a, the worker b, or the worker c.

It should be noted that, the plurality of first training subunits obtain the first weight in different synchronization manners. The following provides detailed descriptions separately.

A first synchronization manner is based on an improved parameter server (parameter server, PS) architecture. Specifically, each training subunit (for example, the worker node) has a complete AI model, and each training subunit trains the AI model based on data allocated to the training subunit. A difference from a conventional PS architecture is that, after each worker completes training in one step to obtain a gradient, the worker updates a weight based on the gradient, and then upload the weight to the master node, and the master node performs a sum or average operation based on weights reported by worker nodes, so that a weight obtained through synchronization among the training subunits is obtained. The worker node does not need to report the gradient, obtain the updated weight after waiting for the parameter server to summarize gradients reported by the workers, and receive the updated weight delivered by the parameter server. Therefore, a quantity of times of communication between the worker and the parameter server is reduced, and therefore, communication duration and communication overheads are reduced.

A second synchronization manner is based on a ring architecture. The ring architecture may be a Ring All Reduce architecture. In this architecture, there is no parameter server. Therefore, workers form a ring, and each worker is connected to other two workers. Each worker only performs information transmission with two adjacent workers. Each worker has a complete copy of model parameters and performs gradient calculation and update. The Ring All Reduce architecture mainly includes two steps: a scatter reduce step and an allgather step. It is assumed that five workers are used. In the scatter reduce step, a gradient calculated on each worker is divided into five equal parts, in other words, a gradient of a weight is divided into five parts. The workers use a same division method. Then, gradients of some parameters on each worker are complete through five times of communication between the workers. In this way, each worker has a part of the weight, and gradients on all other workers can be combined to obtain the complete gradient. It should be noted that, in the Ring All Reduce architecture, any node that completes internal synchronization may be used as the master node, to perform weight update on the training units.

S306: The second training unit receives a second training subtask.

Similar to the first training subtask, the second training subtask is one of the plurality of training subtasks obtained by splitting the task used for training the AI model. The second training subtask is specifically a training subtask that is in the plurality of training subtasks and that is scheduled to the second training unit.

S308: The second training unit obtains, by executing the second training subtask using the plurality of second training subunits, a first weight obtained through synchronization among the plurality of second training subunits.

The second training unit may obtain, by executing the second training subtask using the plurality of second training subunits in parallel, a weight obtained by executing the second training subtask by each second training subunit, and then obtain the second weight by synchronously updating weights obtained by the plurality of second training subunits.

The second training unit includes a master node, for example, the master 2 shown in FIG. 2. The plurality of second training subunits (for example, the worker a, the worker b, or the worker c) may report, to the master node (for example, the master 2), weights (for example, $W_a$, $W_b$, and $W_c$ that are in the computing center 2) obtained through training by the plurality of second training subunits. The master node may obtain the second weight based on a weight reported by a worker node such as the worker a, the worker b, or the worker c.

It should be noted that, the plurality of second training subunits of the second training unit may use a synchronization manner similar to that of the first training subunit, and details are not described herein again.

S310: The first training unit asynchronously receives the second weight.

"Asynchronously" means that one task is executed without waiting for completion of another task. In this embodiment of this application, the first training unit may receive the second weight in an asynchronization manner. Based on this, the first training unit may receive the second weight in a process of performing S304 or before performing S304, and does not need to wait until S304 is completed before performing S310. In this way, unnecessary synchronization waiting duration can be avoided, overall training duration can be shortened, and training efficiency can be improved.

Further, to reduce transmission overheads between the training units, the second training unit may further compress the second weight obtained through the synchronization among the second training subunits, to obtain the compressed second weight. Correspondingly, the first training unit may asynchronously receive the compressed second weight. In this way, transmission overheads can be greatly reduced, and transmission duration between the training units can be shortened.

The second training unit may compress, in different manners, the second weight obtained through the synchronization among the plurality of second training subunits. The following separately describes weight compression manners in detail.

A first manner is a difference-based compression manner. Specifically, the second training unit may determine a difference between the second weight obtained through the current synchronization among the plurality of second training subunits and a second weight obtained through previous synchronization among the plurality of second training subunits, and then compress, based on the difference, the second weight obtained through the current synchronization among the plurality of second training subunits.

The second training unit is used as an $i^{th}$ computing center. A current training step is a $k^{th}$ step. The second weight obtained through the current synchronization among the plurality of second training subunits is denoted as $f_k^i$. The second weight obtained through the previous synchronization among the plurality of second training subunits is denoted as $f_{k-1}^i$. The second training unit may obtain the compressed second weight in the following manner:

$$\theta_k^i = select(f_k^i, f_{k-1}^i, th(k)) \tag{1}$$

*th(k)* represents a preset threshold, and *select*() represents a selection function. Specifically, elements whose difference is greater than the preset threshold are selected from a difference matrix formed by $f_k^i$ and $f_{k-1}^i$, and then an element value of another element is set to 0, to obtain a corresponding sparse matrix. The compressed second weight $\theta_k^i$ may be the foregoing sparse matrix.

A second manner is a norm-based compression manner. Specifically, the second training unit determines a norm, for example, an L2 norm of weights of each row or each column in the second weight obtained through the current synchronization among the plurality of second training subunits. Then, the second training unit may compress, based on the norm, the second weight obtained through the current synchronization among the plurality of second training subunits. The second training unit may select, based on the norm of the weight of each row or each column, a target row or a target column that meets a condition, and obtain the compressed second weight based on the target row or the target column obtained through selection.

S312: The second training unit asynchronously receives the first weight.

Similar to that the first training unit asynchronously receives the second weight, the second training unit may receive the first weight in an asynchronization manner. Based on this, the second training unit may receive the first weight in a process of performing S308 or before performing S308, and does not need to wait until S308 is completed before performing S312. In this way, unnecessary synchronization waiting duration can be avoided, overall training duration can be shortened, and training efficiency can be improved.

Further, to reduce transmission overheads between the training units, the first training unit may further compress the first weight obtained through the synchronization among the first training subunits, to obtain the compressed first weight. Correspondingly, the second training unit may asynchronously receive the compressed first weight. In this way, transmission overheads can be greatly reduced, and transmission duration between training units can be shortened.

A manner in which the first training unit compresses the first weight is similar to a manner in which the second training unit compresses the second weight. For details, refer to related content descriptions in S310. Details are not described herein again.

S314: The first training unit obtains a weight of the AI model based on the first weight and the second weight.

Specifically, the first weight and the second weight may be a complete weight of the AI model. Based on this, the first training unit may perform an average operation on the first weight and the second weight, to obtain the updated weight between the training units. When a training stop condition is not met, a next training step may continue to be performed until the training stop condition is met. An updated weight between the training units when training stops may be used as the weight of the AI model.

The first training unit may also obtain a first correlation between the first weight and the second weight based on a correlation measurement function. The correlation measurement function may be set based on experience. For example, the correlation measurement function may be constructed using a cosine similarity. Details are as follows:

$$g(x, y) = 1 - xy/|x||y| \tag{2}$$

*x* and *y* represent two physical quantities involved in correlation calculation. It is assumed that the first weight is $\theta_k$, and the second weight is $\theta_t$. The first correlation $g(\theta_t, \theta_k)$ may be obtained by substituting the first weight and the second weight into the foregoing formula (2).

Correspondingly, the first training unit may obtain the weight of the AI model based on the first correlation, the first weight, and the second weight. The first training unit may determine coefficients of the first weight and the second weight based on the first correlation, and then perform weighted summation on the first weight and the second weight based on the coefficients, to obtain the weight of the AI model. Details are as follows:

$$\theta_{S+1} = g(\theta_t, \theta_k)\theta_t + (1 - g(\theta_t, \theta_k))\theta_k \tag{3}$$

$\theta_{S+1}$ represents the updated weight between the training units.

Further, to avoid performance deterioration caused by an average policy for model weights, the first training unit may alternatively perform weight update on the training units with reference to historical update information. The historical update information may include a third weight obtained through previous asynchronous update of the first training unit and the at least one second training unit and a variation of previous global update. The third weight may be denoted as $\theta_S$, and the variation of the previous global update is denoted as $\Delta_{n-1}$.

Based on this, the first training unit may first obtain, based on the correlation measurement function, a second correlation between the third weight and a comprehensive weight that is determined using the first weight and the second weight. The comprehensive weight may be an average value of the first weight and the second weight. The second correlation may be as follows:

$$g(\frac{\theta_k + \theta_t}{2}, \theta_S) = 1 - \frac{\theta_k + \theta_t}{2}\theta_S / |\frac{\theta_k + \theta_t}{2}||\theta_S| \qquad (4).$$

Then, the first training unit may obtain a variation of current global update based on the second correlation, a difference between the comprehensive weight and the third weight, and the variation of the previous global update. Details are as follows:

$$\Delta_n = g\left(\frac{\theta_k + \theta_t}{2}, \theta_S\right)\left(\frac{\theta_k + \theta_t}{2} - \theta_S\right) + (1 - g\left(\frac{\theta_k + \theta_t}{2}, \theta_S\right))\Delta_{n-1} \qquad (5).$$

Then, the first training unit may obtain the weight of the AI model based on the variation of the current global update, the first correlation, the first weight, and the second weight. The first training unit may first obtain, based on the variation of the current global update, the first correlation, the first weight, and the second weight, a weight obtained through the current update of the first training unit and the second training unit. Details are as follows:

$$\theta_{S+1} = \Delta_n + g(\theta_t, \theta_k)\theta_t + (1 - g(\theta_t, \theta_k))\theta_k \qquad (6).$$

When the training stop condition is met, the first training unit may stop training, and use, as the weight of the AI model, the weight obtained through the current update. When the training stop condition is not met, the first training unit may continue training until the training stop condition is met, obtain the updated weight between the training units when the training stop condition is met, and use the weight as the weight of the AI model.

In some possible implementations, the first training unit may further determine validity of the second weight or the compressed second weight sent by the second training unit. A case in which the second training unit directly sends the second weight is used as an example for description. When the second weight is an invalid weight, the first training unit may abandon the current update, wait for a second weight sent by the second training unit next time, continue to determine validity of the second weight sent next time, until the received second weight is a valid weight, and perform weight update based on the valid weight.

Specifically, the first training unit may obtain the third weight obtained through the previous asynchronous update of the first training unit and the at least one second training unit, and determine a distance between the third weight and the comprehensive weight that is determined using the first weight and the second weight. The comprehensive weight may be the average value of the first weight and the second weight. It should be noted that, averaging the first weight and the second weight is merely one implementation of obtaining the comprehensive weight. In another possible implementation of embodiments of this application, the comprehensive weight may be obtained in another manner. The distance between the comprehensive weight and the third weight may be one or more of the following: a cosine distance or a Euclidean distance. For ease of description, in embodiments of this application, the cosine distance is used as an example for description. Based on this, the distance between the comprehensive weight and the third weight may be represented using the foregoing second correlation $g\left(\frac{\theta_k + \theta_t}{2}, \theta_S\right)$.

When the distance, for example, $g\left(\frac{\theta_k + \theta_t}{2}, \theta_S\right)$ between the comprehensive weight and the third weight is greater than a preset distance, the first training unit may perform weight update. For example, the first training unit may obtain the weight of the AI model based on the first weight and the second weight. When the distance between the second weight and the third weight is not greater than the preset distance, the first training unit abandons the current update, and performs weight update until the distance between the comprehensive weight and the third weight is greater than the preset distance by accumulating the weights to a specific difference.

S316: The second training unit obtains a weight of the AI model based on the first weight and the second weight.

Similar to the first training unit, the second training unit may perform an average operation on the first weight and the second weight, to obtain the updated weight between the training units. When the training stop condition is not met, the next training step may be performed until the training stop condition is met. The updated weight between the training units when training stops may be used as the weight of the AI model.

The second training unit may also obtain the first correlation between the first weight and the second weight based on the correlation measurement function, and then the second training unit may obtain the weight of the AI model based on the first correlation, the first weight, and the second weight. For a specific implementation in which the second training unit obtains the weight of the AI model based on the first correlation, the first weight, and the second weight, refer to related content descriptions in the foregoing formula (3). Details are not described herein again.

Further, the second training unit may perform weight update on the training units with reference to the historical update information, to avoid performance deterioration caused by the average policy for the model weights. For a process in which the second training unit performs weight update between the training units with reference to the historical update information, refer to related content descriptions in S314. Details are not described herein again.

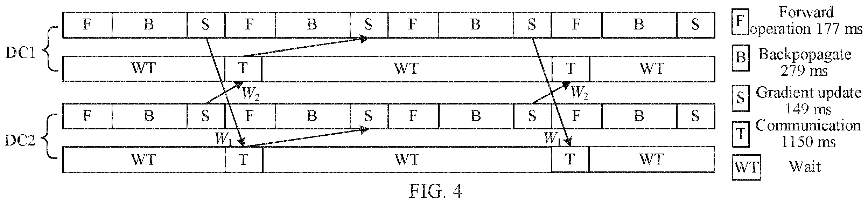

For ease of understanding, an embodiment of this application further provides a pipeline diagram of a method for training an AI model in embodiments of this application. As shown in FIG. 4, a first training unit may be a computing center 1 and is denoted as a DC1, and a second training unit may be a computing center 2 and is denoted as a DC2. A worker node in the DC1 and a worker node in the DC2 may perform a forward operation and backpropagation, then separately perform gradient update, and perform weight synchronization inside the DC, to obtain weights $W_1$ and $W_2$ obtained through the synchronization. The worker in the DC1 may perform a forward operation of a next training step, and a master in the DC1 may asynchronously receive $W_2$ from the DC2. Similarly, the worker in the DC2 may perform a forward operation of the next training step, and a master in the DC2 may asynchronously receive $W_1$ from the DC1. In this way, the master in the DC1 may perform weight update with reference to the asynchronously received $W_2$ during weight synchronization of the next training step. Similarly, the master in DC2 may perform weight update with reference to the asynchronously received $W_1$ during weight synchronization of the next training step. In comparison with FIG. 1, this manner evidently shortens synchronization waiting duration, shortens overall training duration, and improves training efficiency.

It should be noted that, S306, S308, S312, and S316 are optional steps in embodiments of this application, and the method in embodiments of this application may alternatively be performed in another manner. For example, the second training unit may alternatively include one second training subunit. In this way, the second training unit may send, to the first training unit, a weight obtained through training by the second training subunit, to perform weight update.

Base on the foregoing content descriptions, it can be learned that, embodiments of this application provide a hierarchical hybrid asynchronous update training method, to implement a hybrid update policy of synchronous update within a single training unit and asynchronous update across the training units. In this way, unacceptable synchronization waiting duration is avoided, and training duration is greatly shortened. In addition, according to this method, a frequency of update between the training units may be adaptively adjusted using a heuristic algorithm. A selective transmission mechanism is introduced during communication transmission. An adaptive aggregation manner in which the historical update information and current update information are combined is introduced during the weight update. This reduces communication costs on the premise of ensuring precision. In addition, performing weight update with reference to the historical update information may ensure convergence precision, and further ensure performance of the AI model.

Based on the method for training an AI model provided in embodiments of this application, an embodiment of this application further provides a system for training a model as described above.

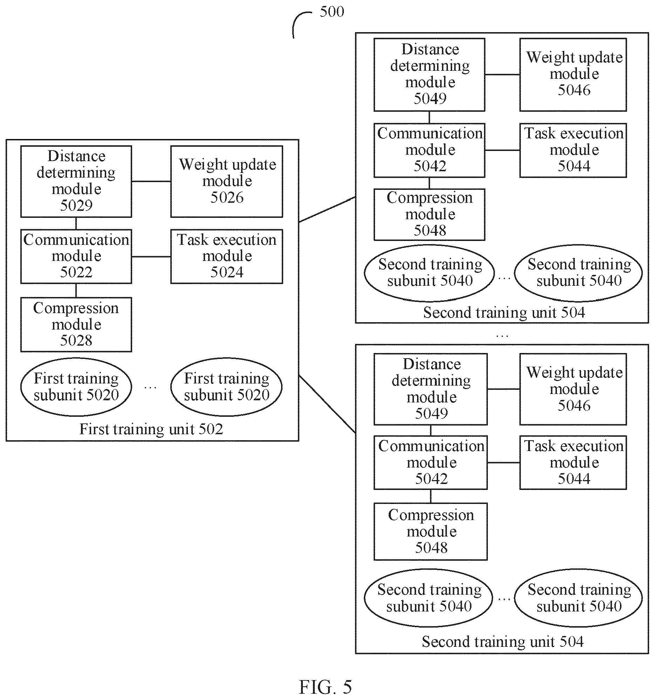

FIG. 5 is a schematic diagram of a structure of a system 500 for training a model. The system 500 for training a model includes a first training unit 502 and at least one second training unit 504. The first training unit includes a plurality of first training subunits 5020.

The first training unit 502 is configured to receive a first training subtask, and obtain, by executing the first training subtask using the plurality of first training subunits 5020, a first weight obtained through synchronization among the plurality of first training subunits.

The second training unit 504 is configured to obtain a second weight by executing a second training subtask.

The first training unit 502 is further configured to asynchronously receive the second weight, and obtain a weight of the AI model based on the first weight and the second weight.

The first training unit 502 may include the following functional modules:

a communication module 5022, configured to receive the first training subtask;
a task execution module 5024, configured to obtain, by executing the first training subtask using the plurality of first training subunits 5020, the first weight obtained through the synchronization among the plurality of first training subunits 5020, where

the communication module 5022 is further configured to asynchronously receive the second weight obtained by executing the second training subtask by the at least one second training unit 504; and

a weight update module 5026, configured to obtain the weight of the AI model based on the first weight and the second weight.

The communication module 5022, the task execution module 5024, and the weight update module 5026 may be implemented using a hardware module or a software module.

When software is used for implementation, the communication module 5022, the task execution module 5024, or the weight update module 5026 may be an application program or an application program module running on a computing device (for example, a server) or a computing cluster (for example, a computing center).

When hardware is used for implementation, the communication module 5022 may be implemented using a transceiver module such as a network interface card or a transceiver. The task execution module 5024 and the weight update module 5026 may be devices implemented using an application-specific integrated circuit (application-specific integrated circuit, ASIC) or a programmable logic device (programmable logic device, PLD), and so on. The foregoing PLD may be implemented using a complex programmable logic device (complex programmable logic device, CPLD), a field programmable gate array (field programmable gate array, FPGA), generic array logic (generic array logic, GAL), or any combination thereof.

In some possible implementations, the second training unit 504 includes a plurality of second training subunits 5040.

The second training unit 504 is specifically configured to:

obtain, by executing the second training subtask using the plurality of second training subunits 5040, the second weight obtained through synchronization among the plurality of second training subunits.

The second training unit 504 may include the following functional modules:

a communication module 5042, configured to receive the second training subtask;

a task execution module 5044, configured to obtain, by executing the second training subtask using the plurality of second training subunits 5040, the second weight obtained through the synchronization among the plurality of second training subunits 5040, where

the communication module 5042 is further configured to asynchronously send the second weight and asynchronously receive the first weight; and

a weight update module 5046, configured to obtain the weight of the AI model based on the first weight and the second weight.

Similar to the modules of the first training unit 502, the communication module 5042, the task execution module 5044, and the weight update module 5046 that are in the second training unit 504 may be implemented using a hardware module or a software module.

When software is used for implementation, the communication module 5042, the task execution module 5044, or the weight update module 5046 may be an application program or an application program module running on a computing device (for example, a server) or a computing cluster (for example, a computing center).

When hardware is used for implementation, the communication module 5042 may be implemented using a transceiver module such as a network interface card or a transceiver. The task execution module 5044 and the weight update module 5046 may be devices implemented using application-specific integrated circuit ASICs or programmable logic device PLDs, and so on. The foregoing PLD may be implemented using a complex program logic device CPLD, a field programmable gate array FPGA, generic array logic GAL, or any combination thereof.

In some possible implementations, the second training unit 504 further includes:

a compression module 5048, configured to compress the second weight obtained through the synchronization among the plurality of second training subunits 5040.

The communication module 5022 in the first training unit 502 is specifically configured to:

asynchronously receive the compressed second weight.

In some possible implementations, the second training unit 504 (for example, the compression module 5048 in the second training unit 504) is specifically configured to:

determine a difference between the second weight obtained through the current synchronization among the plurality of second training subunits and a second weight obtained through previous synchronization among the plurality of second training subunits, and compress, based on the difference, the second weight obtained through the current synchronization among the plurality of second training subunits; or

determine a norm of a weight of each row or each column in the second weight obtained through the current synchronization among the plurality of second training subunits, and compress, based on the norm, the second weight obtained through the current synchronization among the plurality of second training subunits.

In some possible implementations, the first training unit 502 further includes:

a compression module 5028, configured to compress the first weight obtained through the synchronization among the plurality of first training subunits 5020.

The communication module 5022 is further configured to asynchronously send the compressed first weight to the second training unit 504, to enable the second training unit 504 to perform weight update.

Similar to the compression module 5048 in the second training unit 504, the compression module 5028 in the first training unit 502 may perform compression based on a difference between weights, or perform compression based on a norm of a weight of each row or each column.

The compression module 5028 and the compression module 5048 may be implemented using a hardware module or a software module.

When software is used for implementation, the compression module 5028 or the compression module 5048 may be an application program or an application program module running on a computing device (for example, a server) or a computing cluster (for example, a computing center). When hardware is used for implementation, the compression module 5028 and the compression module 5048 may be devices implemented using application-specific integrated circuit ASICs or programmable logic device PLDs, or the like.

In some possible implementations, the first training unit 502 further includes:

a distance determining module 5029, configured to obtain a third weight obtained through previous asynchronous update of the first training unit and the at least one second training unit, and determine a distance between the third weight and a comprehensive weight that is determined using the first weight and the second weight.

The first training unit 502 (for example, the weight update module 5026 in the first training unit 502) is specifically configured to:

obtain the weight of the AI model based on the first weight and the second weight when the distance between the comprehensive weight and the third weight is greater than a preset distance.

Similar to the first training unit 502, the second training unit 504 may also include a distance determining module 5049. The distance determining module 5049 is configured to obtain a third weight obtained through previous asynchronous update of the second training unit 504 and the first training unit 502, and determine a distance between the third weight and a comprehensive weight that is determined using the first weight and the second weight. The weight update module 5046 is specifically configured to: obtain the weight of the AI model based on the first weight and the second weight when the distance between the comprehensive weight and the third weight is greater than a preset distance.

The distance determining module 5029 and the distance determining module 5049 may be implemented using a hardware module or a software module.

When software is used for implementation, the distance determining module 5029 or the distance determining module 5049 may be an application program or an application program module running on a computing device (for example, a server) or a computing cluster (for example, a computing center). When hardware is used for implementation, the distance determining module 5029 and the distance determining module 5049 may be devices implemented using application-specific integrated circuit ASICs or programmable logic device PLDs, or the like.

In some possible implementations, the first training unit 502 (for example, the weight update module 5026 in the first training unit 502) is specifically configured to:

obtain a first correlation between the first weight and the second weight based on a correlation measurement function; and
obtain the weight of the AI model based on the first correlation, the first weight, and the second weight.

In some possible implementations, the first training unit 502 (for example, the weight update module 5026 in the first training unit 502) is further configured to:

obtain, based on the correlation measurement function, a second correlation between the third weight and the comprehensive weight that is determined using the first weight and the second weight, where the third weight is a weight obtained through the previous asynchronous update of the first training unit and the at least one second training unit; and
obtain a variation of current global update based on the second correlation, a difference between the comprehensive weight and the third weight, and a variation of previous global update.

Correspondingly, the first training unit 502 (for example, the weight update module 5026 in the first training unit 502) is specifically configured to:

obtain the weight of the AI model based on the variation of the current global update, the first correlation, the first weight, and the second weight.

In some possible implementations, the plurality of training subunits (for example, the first training subunits 5020 or the second training subunits 5040) in the training unit (for example, the first training unit 502 or the second training unit 504) may be synchronized using an improved parameter server architecture or a ring architecture.

In some possible implementations, the training unit (for example, the first training unit 502 or the second training unit 504) may be a computing cluster. The computing cluster may be a computing center including a plurality of servers. The training subunit (for example, the first training subunit 5020 or the second training subunit 5040) may be a server in the computing cluster. In this way, collaborative training across computing centers is implemented.

In some possible implementations, the training unit may be a server, and the training subunit may be a training card in the server. In this way, collaborative training inside a computing center can be implemented.

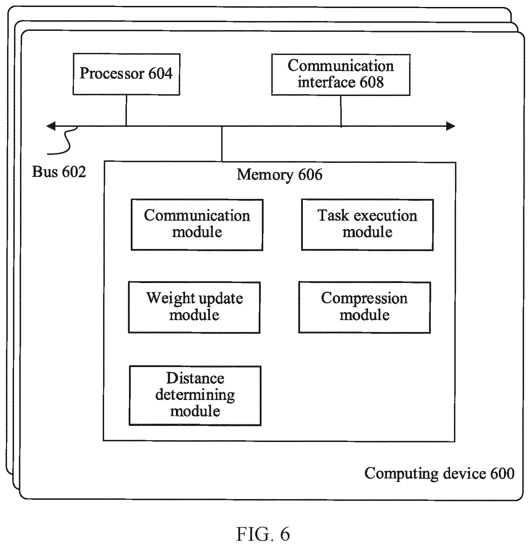

An embodiment of this application further provides a computing cluster. The computing cluster may include at least one computing device. A computing device 600 may be a server or a terminal device. The terminal device includes but is not limited to a desktop computer, a notebook computer, or a smartphone. As shown in FIG. 6, the computing device 600 includes: a bus 602, a processor 604, a memory 606, and a communication interface 608. The processor 604, the memory 606, and the communication interface 608 communicate with each other via the bus 602. It should be understood that quantities of processors and memories in the computing device 600 are not limited in this application.

The bus 602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 6, but this does not mean that there is only one bus or only one type of bus. The bus 602 may include a path for transmitting information between components (for example, the memory 606, the processor 604, and the communication interface 608) of the computing device 600.

The processor 604 may be any one or more of processors such as a central processing unit (central processing unit, CPU), a graphics processing unit (graphics processing unit, GPU), a micro processor (micro processor, MP), or a digital signal processor (digital signal processor, DSP).

The memory 606 may include a volatile memory (volatile memory), for example, a random access memory (random access memory, RAM). The memory 606 may alternatively include a non-volatile memory (non-volatile memory), for example, a read-only memory (read-only memory, ROM), a flash memory, a hard disk drive (hard disk drive, HDD), or a solid-state drive (solid-state drive, SSD). The memory 606 stores executable program code, and the processor 604 executes the executable program code to implement the foregoing method for training an AI model. Specifically, the memory 606 stores instructions used by the system 500 for training a model to perform the method for training an AI model. For example, the memory 606 may store instructions corresponding to a communication module, a task execution module, a weight update module, a compression module, and a distance determining module that are in the system 500 for training a model.

The communication interface 608 uses, for example but not limited to, a transceiver module such as a network interface card or a transceiver, to implement communication between the computing device 600 and another device, a computing cluster, or a communication network.

As shown in FIG. 6, the computing cluster may include a plurality of computing devices 600. Memories 606 in the plurality of computing devices 600 in the computing cluster may store same instructions used by the system 500 for training a model to perform the method for training an AI model.

In some possible implementations, the plurality of computing devices 600 in the computing cluster may alternatively be configured to execute some instructions used by the system 500 for training a model to perform the method for training an AI model. In other words, a combination of the plurality of computing devices 600 may jointly execute the instructions used by the system 500 for training a model to perform the method for training an AI model.

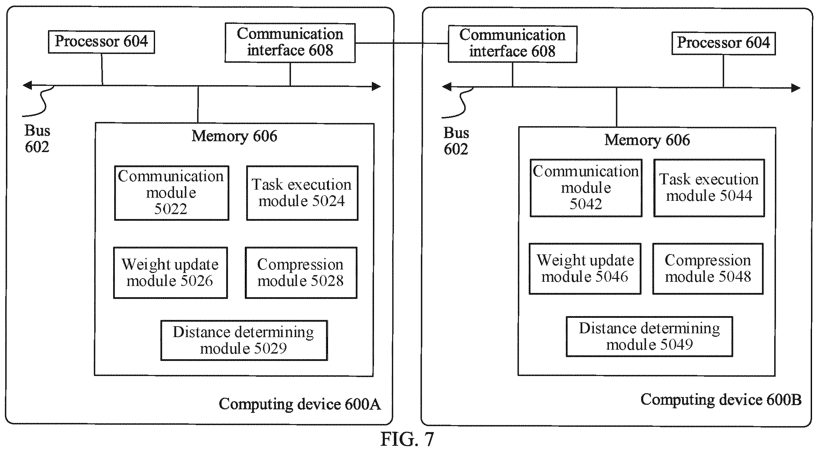

FIG. 7 shows a possible implementation. As shown in FIG. 7, two computing devices 600A and 600B are connected through a communication interface 608. A memory in the computing device 600A stores instructions used for performing a function of the first training unit 502. For example, the memory in the computing device 600A stores instructions corresponding to a communication module 5022, a task execution module 5024, a weight update module 5026, a compression module 5028, and a distance determining module 5029. A memory in the computing device 600B stores instructions used for performing a function of the second training unit 504. For example, the memory in the computing device 600B stores instructions corresponding to a communication module 5042, a task execution module 5044, a weight update module 5046, a compression module 5048, and a distance determining module 5049. In other words, the memories 606 of the computing devices 600A and 600B jointly store the instructions used by the system 600 for training a model to perform the method for training an AI model.

It should be understood that functions of the computing device 600A shown in FIG. 7 may alternatively be completed by a plurality of computing devices 600. Likewise, functions of the computing device 600B may alternatively be completed by a plurality of computing devices 600.

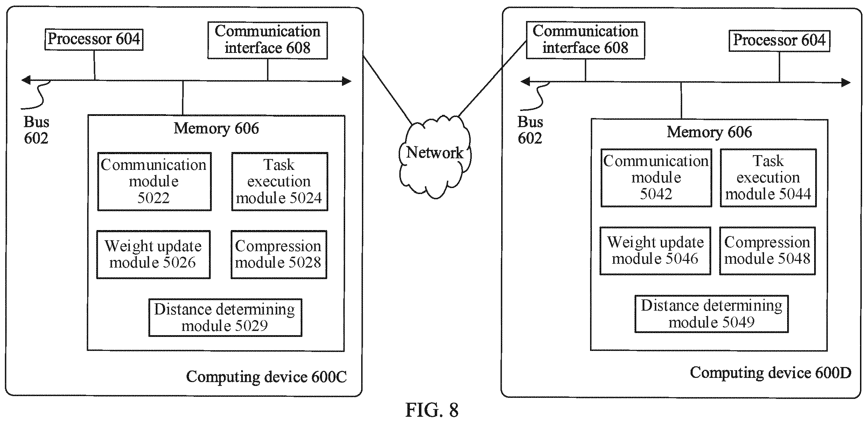

In some possible implementations, a plurality of computing devices in a computing cluster may be connected through a network. The network may be a wide area network, a local area network, or the like. FIG. 8 shows a possible implementation. As shown in FIG. 8, two computing devices 600C and 600D are connected through a network. Specifically, a communication interface in each computing device is connected to the network. In this possible implementation, a memory 606 in the computing device 600C stores instructions for performing a function of the first training unit 502. For example, the memory in the computing device 600A stores instructions corresponding to a communication module 5022, a task execution module 5024, a weight update module 5026, a compression module 5028, and a distance determining module 5029. In addition, a memory 606 in the computing device 600D stores instructions for performing a function of the second training unit 504. For example, the memory in the computing device 600B stores instructions corresponding to a communication module 5042, a task execution module 5044, a weight update module 5046, a compression module 5048, and a distance determining module 5049.

It should be understood that functions of the computing device 600C shown in FIG. 6 may alternatively be completed by a plurality of computing devices 600. Likewise, functions of the computing device 600D may alternatively be completed by a plurality of computing devices 600.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk drive, a hard disk drive, or a magnetic tape), an optical medium (for example, a DVD), a semiconductor medium (for example, a solid-state drive), or the like. The computer-readable storage medium includes instructions, and the instructions instruct the computing device to perform the method for training an AI model applied to the system 500 for training a model.

An embodiment of this application further provides a computer program product including instructions. The computer program product may be software or a program product that includes instructions and that can run on a computing device or a computing cluster or is stored in any usable medium. When the computer program product runs on the computing device or the computing cluster, the computing device or the computing cluster is enabled to perform the foregoing method for training an AI model.

Finally, it should be noted that, the foregoing embodiments are merely intended for describing the technical solutions of the present invention other than limiting the present invention. Although the present invention is described in detail with reference to the foregoing embodiments, a person of ordinary skill in the art should understand that, the technical solutions described in the foregoing embodiments may still be modified, or some technical features thereof may be equivalently replaced. These modifications or replacements do not make the essence of the corresponding technical solutions depart from the protection scope of the technical solutions of embodiments of the present invention.

**Claims**

1. A method for training an artificial intelligence AI model, wherein the method is applied to a system for training a model, the system for training a model comprises a first training unit and at least one second training unit, the first training unit comprises a plurality of first training subunits, and the method comprises:

   receiving, by the first training unit, a first training subtask;
   obtaining, by the first training unit by executing the first training subtask using the plurality of first training subunits, a first weight obtained through synchronization among the plurality of first training subunits, and asynchronously receiving a second weight obtained by executing a second training subtask by the at least one second training unit; and
   obtaining, by the first training unit, a weight of the AI model based on the first weight and the second weight.

2. The method according to claim 1, wherein the second training unit comprises a plurality of second training subunits, and the method comprises:
   obtaining, by the second training unit by executing the second training subtask using the plurality of second training subunits, the second weight obtained through synchronization among the plurality of second training subunits.

3. The method according to claim 2, wherein the method further comprises:

   compressing, by the second training unit, the second weight obtained through the synchronization among the plurality of second training subunits; and
   the asynchronously receiving, by the first training unit, a second weight obtained by executing a second training subtask by the at least one second training unit comprises:

asynchronously receiving, by the first training unit, the compressed second weight.

4. The method according to claim 3, wherein the compressing, by the second training unit, the second weight obtained through the synchronization among the plurality of second training subunits comprises:

determining, by the second training unit, a difference between the second weight obtained through the current synchronization among the plurality of second training subunits and a second weight obtained through previous synchronization among the plurality of second training subunits, and compressing, based on the difference, the second weight obtained through the current synchronization among the plurality of second training subunits; or determining, by the second training unit, a norm of a weight of each row or each column in the second weight obtained through the current synchronization among the plurality of second training subunits, and compressing, based on the norm, the second weight obtained through the current synchronization among the plurality of second training subunits.

5. The method according to any one of claims 1 to 4, wherein the method further comprises:

obtaining, by the first training unit, a third weight obtained through previous asynchronous update of the first training unit and the at least one second training unit; and determining, by the first training unit, a distance between the third weight and a comprehensive weight that is determined using the first weight and the second weight; and the obtaining, by the first training unit, a weight of the AI model based on the first weight and the second weight comprises: obtaining, by the first training unit, the weight of the AI model based on the first weight and the second weight when the distance between the comprehensive weight and the third weight is greater than a preset distance.

6. The method according to any one of claims 1 to 5, wherein the obtaining, by the first training unit, a weight of the AI model based on the first weight and the second weight comprises:

obtaining, by the first training unit, a first correlation between the first weight and the second weight based on a correlation measurement function; and obtaining, by the first training unit, the weight of the AI model based on the first correlation, the first weight, and the second weight.

7. The method according to claim 6, wherein the method further comprises:

obtaining, by the first training unit based on the correlation measurement function, a second correlation between the third weight and the comprehensive weight that is determined using the first weight and the second weight, wherein the third weight is a weight obtained through the previous asynchronous update of the first training unit and the at least one second training unit; and obtaining, by the first training unit, a variation of current global update based on the second correlation, a difference between the comprehensive weight and the third weight, and a variation of previous global update; and the obtaining, by the first training unit, the weight of the AI model based on the first correlation, the first weight, and the second weight comprises: obtaining, by the first training unit, the weight of the AI model based on the variation of the current global update, the first correlation, the first weight, and the second weight.

8. The method according to any one of claims 1 to 7, wherein the plurality of training subunits in the training unit are synchronized using an improved parameter server architecture or a ring architecture.

9. The method according to any one of claims 1 to 8, wherein the training unit is a computing cluster, and the training subunit is a server in the computing cluster.

10. The method according to any one of claims 1 to 8, wherein the training unit is a server, and the training subunit is a training card in the server.

11. A system for training a model, wherein the system for training a model comprises a first training unit and at least one second training unit, and the first training unit comprises a plurality of first training subunits, wherein

the first training unit is configured to receive a first training subtask, and obtain, by executing the first training subtask using the plurality of first training subunits, a first weight obtained through synchronization among the plurality of first training subunits;

the second training unit is configured to obtain a second weight by executing a second training subtask; and

the first training unit is further configured to asynchronously receive the second weight, and obtain a weight of the AI model based on the first weight and the second weight.

12. The system according to claim 11, wherein the second training unit comprises a plurality of second training subunits; and

the second training unit is specifically configured to:

obtain, by executing the second training subtask using the plurality of second training subunits, the second weight obtained through synchronization among the plurality of second training subunits.

13. The system according to claim 12, wherein the second training unit is further configured to:

compress the second weight obtained through the synchronization among the plurality of second training subunits; and

the first training unit is specifically configured to:

asynchronously receive the compressed second weight.

14. The system according to claim 13, wherein the second training unit is specifically configured to:

determine a difference between the second weight obtained through the current synchronization among the plurality of second training subunits and a second weight obtained through previous synchronization among the plurality of second training subunits, and compress, based on the difference, the second weight obtained through the current synchronization among the plurality of second training subunits; or

determine a norm of a weight of each row or each column in the second weight obtained through the current synchronization among the plurality of second training subunits, and compress, based on the norm, the second weight obtained through the current synchronization among the plurality of second training subunits.

15. The system according to any one of claims 11 to 14, wherein the first training unit is further configured to:

obtain a third weight obtained through previous asynchronous update of the first training unit and the at least one second training unit; and

determine a distance between the third weight and a comprehensive weight that is determined using the first weight and the second weight; and

the first training unit is specifically configured to:

obtain, by the first training unit, the weight of the AI model based on the first weight and the second weight when the distance between the comprehensive weight and the third weight is greater than a preset distance.

16. The system according to any one of claims 11 to 15, wherein the first training unit is specifically configured to:

obtain a first correlation between the first weight and the second weight based on a correlation measurement function; and

obtain the weight of the AI model based on the first correlation, the first weight, and the second weight.

17. The system according to claim 16, wherein the first training unit is further configured to:

obtain, based on the correlation measurement function, a second correlation between the third weight and the comprehensive weight that is determined using the first weight and the second weight, wherein the third weight is a weight obtained through the previous asynchronous update of the first training unit and the at least one second training unit; and

obtain a variation of current global update based on the second correlation, a difference between the comprehensive weight and the third weight, and a variation of previous global update; and

the first training unit is specifically configured to:

obtain the weight of the AI model based on the variation of the current global update, the first correlation, the first weight, and the second weight.

**18.** The system according to any one of claims 11 to 17, wherein the plurality of training subunits in the training unit are synchronized using an improved parameter server architecture or a ring architecture.

**19.** The system according to any one of claims 11 to 18, wherein the training unit is a computing cluster, and the training subunit is a server in the computing cluster.

**20.** The system according to any one of claims 11 to 18, wherein the training unit is a server, and the training subunit is a training card in the server.

**21.** A computing cluster, wherein the computing cluster comprises at least one computing device, the at least one computing device comprises at least one processor and at least one memory, and the at least one memory stores computer-readable instructions; and the at least one processor executes the computer-readable instructions, to enable the computing cluster to perform the method according to any one of claims 1 to 10.

**22.** A computer-readable storage medium, wherein the computer-readable storage medium comprises computer-readable instructions; and the computer-readable instructions are used for implementing the method according to any one of claims 1 to 10.

**23.** A computer program product, wherein the computer program product comprises computer-readable instructions; and the computer-readable instructions are used for implementing the method according to any one of claims 1 to 10.

FIG. 1

FIG. 2

System for training a model

| First training unit | | Second training unit |

Receive a first training subtask

Obtain, by executing the first training subtask using a plurality of first training subunits, a first weight obtained through synchronization among the plurality of first training subunits

S302

S304

Receive a second training subtask

Obtain, by executing the second training subtask using a plurality of second training subunits, a second weight obtained through synchronization among the plurality of second training subunits

S306

S308

S310: The first training unit asynchronously receives the second weight

S312: The second training unit asynchronously receives the first weight

Obtain a weight of the AI model based on the first weight and the second weight

S314

Obtain a weight of the AI model based on the first weight and the second weight

S316

FIG. 3

| DC1 | F | B | S | F | B | S | F | B | S | F | B | S |
| | WT | | T | WT | | | T | WT | | | |

$W_2$

| DC2 | F | B | S | F | B | S | F | B | S | F | B | S |
| | WT | | T | WT | | | T | WT | | | |

$W_1$

F  Forward operation 177 ms

B  Backpopagate 279 ms

S  Gradient update 149 ms

T  Communication 1150 ms

WT  Wait

FIG. 4

EP 4 332 837 A1

500

Distance determining module 5049 — Weight update module 5046

Communication module 5042 — Task execution module 5044

Compression module 5048

Second training subunit 5040 ··· Second training subunit 5040

Second training unit 504

···

Distance determining module 5029 — Weight update module 5026

Communication module 5022 — Task execution module 5024

Compression module 5028

First training subunit 5020 ··· First training subunit 5020

First training unit 502

Distance determining module 5049 — Weight update module 5046

Communication module 5042 — Task execution module 5044

Compression module 5048

Second training subunit 5040 ··· Second training subunit 5040

Second training unit 504

FIG. 5

Processor 604

Communication interface 608

Bus 602

Memory 606

Communication module

Task execution module

Weight update module

Compression module

Distance determining module

Computing device 600

FIG. 6

| Processor 604 | Communication interface 608 | | Communication interface 608 | Processor 604 |

Bus 602

Bus 602

**Memory 606**

| Communication module 5022 | Task execution module 5024 |

| Weight update module 5026 | Compression module 5028 |

Distance determining module 5029

Computing device 600A

**Memory 606**

| Communication module 5042 | Task execution module 5044 |

| Weight update module 5046 | Compression module 5048 |

Distance determining module 5049

Computing device 600B

FIG. 7

FIG. 8

EP 4 332 837 A1

## INTERNATIONAL SEARCH REPORT

| | |
|---|---|
| International application No. |
| **PCT/CN2023/101357** |

### A. CLASSIFICATION OF SUBJECT MATTER

G06N 3/082(2023.01)i

According to International Patent Classification (IPC) or to both national classification and IPC

### B. FIELDS SEARCHED

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 分布式训练, 同步, 异步, 混合, 同步训练, 异步训练, 混合训练, 分层异步, 压缩, 权重, 传输, distributed training, synchronous, asynchronous, hybrid training, hierarchical asynchronous, compression, weight, transmission

### C. DOCUMENTS CONSIDERED TO BE RELEVANT

| Category* | Citation of document, with indication, where appropriate, of the relevant passages | Relevant to claim No. |
|---|---|---|
| X | CN 112712171 A (HUNAN UNIVERSITY OF TECHNOLOGY) 27 April 2021 (2021-04-27) description, paragraph 0088 | 1-2, 5-10, 11-12, 15-23 |
| Y | CN 112712171 A (HUNAN UNIVERSITY OF TECHNOLOGY) 27 April 2021 (2021-04-27) description, paragraph 0088 | 3-4, 13-14 |
| Y | CN 114548426 A (BEIJING BAIDU NETCOM SCIENCE AND TECHNOLOGY CO., LTD.) 27 May 2022 (2022-05-27) description, paragraphs 0152-0172 | 3-4, 13-14 |
| X | CN 111582494 A (ZHEJIANG UNIVERSITY) 25 August 2020 (2020-08-25) description, paragraphs 0003-0037 | 1-2, 5-10, 11-12, 15-23 |
| Y | CN 111582494 A (ZHEJIANG UNIVERSITY) 25 August 2020 (2020-08-25) description, paragraphs 0003-0037 | 3-4, 13-14 |
| A | CN 108460457 A (SUZHOU NISE INTELLIGENT TECHNOLOGY CO., LTD.) 28 August 2018 (2018-08-28) entire document | 1-23 |

☑ Further documents are listed in the continuation of Box C.    ☑ See patent family annex.

| | |
|---|---|
| *   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **14 September 2023** | **22 September 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/101357** |

**C.    DOCUMENTS CONSIDERED TO BE RELEVANT**

| Category* | Citation of document, with indication, where appropriate, of the relevant passages | Relevant to claim No. |
|---|---|---|
| A | CN 113011602 A (UNIVERSITY OF SCIENCE AND TECHNOLOGY OF CHINA, SUZHOU INSTITUTE FOR ADVANCED RESEARCH) 22 June 2021 (2021-06-22) entire document | 1-23 |

International application No.

**PCT/CN2023/101357**

| Patent document cited in search report | | | Publication date (day/month/year) | Patent family member(s) | | | Publication date (day/month/year) |
|---|---|---|---|---|---|---|---|
| CN | 112712171 | A | 27 April 2021 | None | | | |
| CN | 114548426 | A | 27 May 2022 | US | 2022383198 | A1 | 01 December 2022 |
| CN | 111582494 | A | 25 August 2020 | None | | | |
| CN | 108460457 | A | 28 August 2018 | None | | | |
| CN | 113011602 | A | 22 June 2021 | None | | | |

**EP 4 332 837 A1**

**REFERENCES CITED IN THE DESCRIPTION**

**Patent documents cited in the description**

- CN 202210764337

- CN 202210986001